# EUROPEAN PATENT APPLICATION

(11) **EP 4 579 547 A1**
(43) Date of publication of application: **02.07.2025**
(21) Application number: 24218980.1
(22) Date of filing: 11.12.2024
(51) Int. Cl.: G06Q 10/0631, G06Q 10/20

(54) **MOBILITY, REMOTE SUPPORT SYSTEM, AND REMOTE SUPPORT METHOD**

(30) Priority: 26.12.2023 JP 2023219145
(71) Applicant: TOYOTA JIDOSHA KABUSHIKI KAISHA, Aichi-ken, 471-8571 (JP)
(72) Inventor: SUEHIRO, Yuki, Toyota-shi, 471-8571 (JP); TAMAGAWA, Shuichi, Toyota-shi, 471-8571 (JP)
(74) Representative: TBK

(57) **Abstract**

A mobility configured to receive remote support via a management device (300), the mobility includes one or more processors configured to: calculate a score serving as a basis of an assignment process performed by the management device (300), the assignment process being a process of assigning at least one of a remote supporter and a remote support terminal (200) to the mobility, and the remote support terminal (200) being used by the remote supporter; and transmit the calculated score to the management device (300).

## Description

### BACKGROUND OF THE INVENTION

### 1. Field of the Invention

The present disclosure relates to a mobility, a remote support system, and a remote support method.

### 2. Description of Related Art

Japanese Unexamined Patent Application Publication No. 2019-185279 (JP 2019-185279 A) discloses a control device that manages remote control on an autonomous vehicle. The control device determines a processing order that is the order of execution of remote control on target vehicles, and assigns remote control tasks to operators in accordance with the determined processing order. The processing order is determined based on results of calculation of work periods required for the remote control on the target vehicles and priority levels. The priority levels are calculated based on various types of information such as traffic conditions around the target vehicles.

### SUMMARY OF THE INVENTION

In the technology described in JP 2019-185279 A, the control device calculates the priority levels to be used for assigning operators based on various types of information. Therefore, the processing load on the control device for the operator assignment increases. More specifically, the processing load on the control device increases as the number of target vehicles requesting remote control at the same time increases.

The present disclosure provides a technology capable of reducing a processing load on a management device for assignment of at least either of remote supporters and remote support terminals to mobilities requesting remote support.

A first aspect of the present disclosure relates to a mobility configured to receive remote support via a management device, the mobility includes one or more processors configured to: calculate a score serving as a basis of an assignment process performed by the management device, the assignment process being a process of assigning at least one of a remote supporter and a remote support terminal to the mobility, and the remote support terminal being used by the remote supporter; and transmit the calculated score to the management device.

A second aspect of the present disclosure relates to a remote support system comprising: a plurality of mobilities; and a management device configured to manage remote support of the mobilities, wherein: each of the mobilities includes one or more first processors; the one or more first processors are configured to calculate a score indicating an urgency level of a request for the remote support, and transmit the calculated score to the management device; the management device includes one or more second processors; and the one or more second processors are configured to determine assignment order of the mobilities based on the score received from each of the mobilities, and assign at least one of a remote supporter and a remote support terminal to each of the mobilities according to the determined assignment order, the remote support terminal being used by the remote supporter.

A third aspect of the present disclosure relates to a remote support method of remote support of a plurality of mobilities performed by a computer, the remote support method includes: calculating, by each of the mobilities, a score indicating an urgency level of a request for the remote support from each of the mobilities; transmitting the calculated score from each of the mobilities to a management device configured to manage the remote support; determining assignment order of the mobilities based on the score from each of the mobilities; and assigning at least one of a remote supporter and a remote support terminal to each of the mobilities according to the determined assignment order, the remote support terminal being used by the remote supporter.

According to the present disclosure, the score serving as the basis for assignment of at least either of the remote supporter and the remote support terminal is calculated on the mobility side that requests remote support. Thus, the processing load on the management device related to the assignment can be reduced.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a conceptual diagram illustrating an overview of a remote support system;
FIG. 2 shows examples of the content of various types of remote support that are requested to various mobilities;
FIG. 3 is a conceptual diagram showing an example of the configuration of the remote support system;
FIG. 4 is a block diagram showing an example of the configuration of a mobility;
FIG. 5 is a block diagram showing an example of the configuration of a remote support terminal;
FIG. 6 is a block diagram showing an example of the configuration of a remote support management device;
FIG. 7 is a block diagram showing a specific example of the configuration of a control device shown in FIG. 4;
FIG. 8 is a flowchart showing a first specific example of a process on the mobility side shown in FIG. 1;
FIG. 9 shows examples of mobility state information and score components SC1-i;
FIG. 10 shows examples of user/service state information and score components SC2-i;
FIG. 11 is a flowchart showing a second specific example of the process on the mobility side shown in FIG. 1;
FIG. 12 shows examples of normalized mobility state information and the score components SC1-i;
FIG. 13 is a flowchart showing a specific example of a process (assignment process) on the management device side shown in FIG. 1;
FIG. 14 shows an example of update of assignment order ORD in step S32;
FIG. 15 shows an example of update of an assignment relationship REL in step S33;
FIG. 16 shows another example of the update of the assignment relationship REL in step S33;
FIG. 17 is a flowchart showing an example of a process related to update of a score SC by the management device using infrastructure sensor information;
FIG. 18 is a flowchart showing an example of a process on the management device side involving a process related to update of the score SC in consideration of the type of mobility; and
FIG. 19 is a flowchart showing an example of a process on the management device side involving a process related to update of the score SC in consideration of the type of mobility and the type of service.

### DETAILED DESCRIPTION OF EMBODIMENTS

An embodiment of the present disclosure will be described with reference to the accompanying drawings.

### 1. Overview of Remote Support System

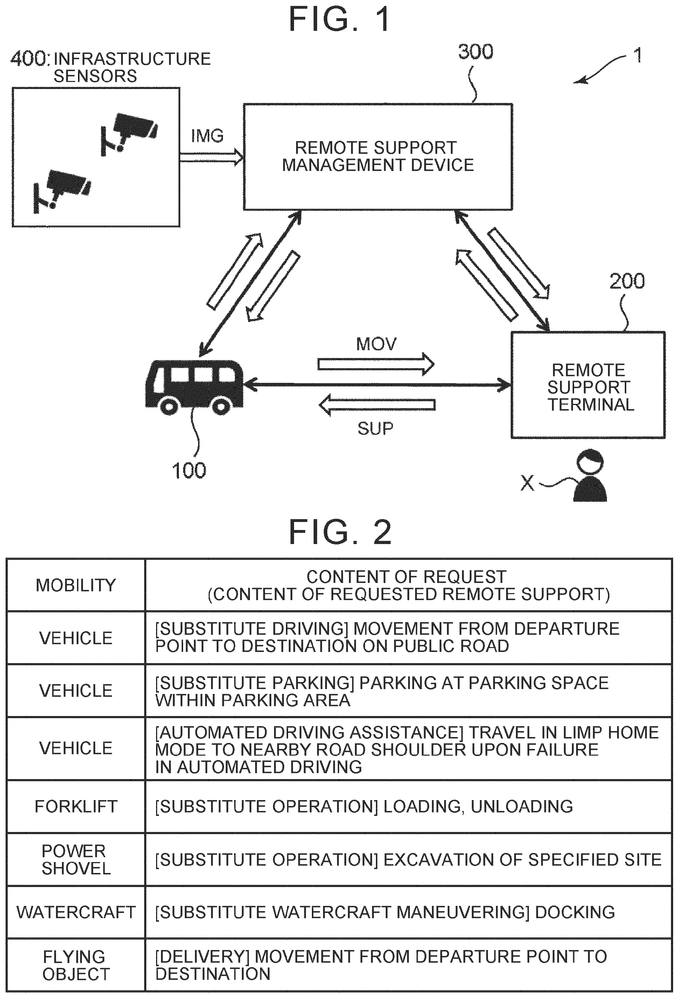

FIG. 1 is a conceptual diagram illustrating an overview of a remote support system 1 according to the present embodiment. The remote support system 1 is a system for remote support of a mobility 100. The remote support is a concept including remote operation, remote assistance, and remote monitoring. The remote operation is a concept including remote driving. The remote support system 1 includes the mobility 100, a remote support terminal 200, and a remote support management device 300. The remote support system 1 may further include one or more infrastructure sensors 400 as shown in FIG. 1.

The mobility 100 is a moving object that can move. The mobility 100 may be manually operated by an operator in the mobility 100. The mobility 100 may have an autonomous moving function. In any case, the mobility 100 is configured to be operated even remotely as needed. That is, the mobility 100 is an object to be remotely supported by the remote support system 1. The mobility 100 receives remote support via the management device 300.

The number of types of mobility 100 to be remotely supported is not limited to one, and may be two or more. For example, the mobility 100 is a vehicle that travels on public roads (e.g., a passenger car, a truck, a bus, a Mobility as a Service (MaaS) vehicle, or an automated driving vehicle). As another example, the mobility 100 may be a vehicle that is used in a factory (e.g., a forklift or an industrial dolly). As still another example, the mobility 100 may be a special small vehicle (e.g., a golf cart, a personal mobility, or an electric wheelchair). As yet another example, the mobility 100 may be a construction machine (e.g., a power shovel or a bulldozer). As a further example, the mobility 100 may be a robot (e.g., a logistics robot or a work robot). As a still further example, the mobility 100 may be a flying object (e.g., a drone). As a yet further example, the mobility 100 may be a watercraft (e.g., a small boat or a large cruise ship). As a yet further example, the mobility 100 may be a ride in an amusement park (e.g., a cart or an attraction).

FIG. 2 shows examples of the content of various types of remote support that are requested to various mobilities 100. As illustrated in FIG. 2, there are a variety of types of mobility 100, and a variety of types of remote support are requested to such mobilities 100. More specifically, all the examples shown in FIG. 2 are examples of remote operation. The remote support may be requested by the mobility 100 itself, or may be requested by a service provider affiliated with the remote support system 1. In the latter case, the content of the remote support can also be said to be the content of a service provided by the service provider. In addition to the examples shown in FIG. 2, other examples of the content of the remote support (service content) include delivery of shared cars, home delivery, luggage transportation, movement of personal mobilities, substitute operation for amusement park attractions, and drone landing.

The remote support terminal 200 is a terminal device that a remote supporter X uses when remotely supporting the mobility 100. That is, the remote support terminal 200 is configured to be used by the remote supporter X for remote support of the mobility 100. Examples of the remote support terminal 200 include a cockpit-type terminal, a personal computer (PC), a tablet, and a smartphone. A single remote support terminal 200 may be configured to remotely support various types of mobility 100. Alternatively, a single remote support terminal 200 may be dedicated to remote support of a specific mobility 100. The combination of the remote supporter X and the remote support terminal 200 may be determined in advance, or may be changeable as desired. That is, a single remote support terminal 200 may be used only by a specific remote supporter X, or may be used by various remote supporters X in turns.

The remote support management device (or simply management device) 300 manages the remote support system 1. The management device 300 may be constituted from a plurality of servers that perform distributed processing. For example, the management device 300 manages a plurality of remote supporters X and a plurality of remote support terminals 200. In response to a remote support request, the management device 300 assigns a remote supporter X and a remote support terminal 200 to remote support of a mobility 100. The management device 300 may also manage the state of the mobility 100 during remote support. The management device 300 will be described in detail later.

The mobility 100, the remote support terminal 200, and the management device 300 can communicate with each other via a communication network. For example, the mobility 100 can wirelessly communicate with the remote support terminal 200 and the management device 300 via a wireless communication network. The remote support terminal 200 and the management device 300 can communicate with each other via a wired communication network or a wireless communication network. The mobility 100 and the remote support terminal 200 may communicate with each other via the management device 300, or may communicate directly with each other without intermediation of the management device 300.

The flow of information during remote support of the mobility 100 is roughly as follows.

The mobility 100 is equipped with various sensors including a camera. The camera captures an image of the surroundings of the mobility 100. The image of the surroundings of the mobility 100 is thus obtained by the camera. Mobility information MOV is information obtained by various sensors, and includes at least the image captured by the camera. The mobility information MOV may include the location and state (e.g., speed and steering angle) of the mobility 100. The mobility 100 transmits the mobility information MOV to the remote support terminal 200.

The remote support terminal 200 receives the mobility information MOV transmitted from the mobility 100. The remote support terminal 200 presents the mobility information MOV to the remote supporter X. Specifically, the remote support terminal 200 is equipped with a display device, and displays the image etc. on the display device. The remote supporter X grasps the surroundings of the mobility 100 by looking at the displayed information, and remotely supports the mobility 100. Remote support information SUP is information on remote support by the remote supporter X. In the example of remote operation, the remote support information SUP includes, for example, an amount of operation input by the remote supporter X. Therefore, in the example of remote operation, it can be said that the remote support information SUP (i.e., remote operation information) is information reflecting the degree of remote operation by the remote supporter X. In the example of remote assistance, the remote support information SUP includes an instruction input by the remote supporter X. The remote support terminal 200 transmits the remote support information SUP to the mobility 100.

The mobility 100 receives the remote support information SUP transmitted from the remote support terminal 200. For example, the mobility 100 performs mobility control according to the received remote support information SUP. Remote support of the mobility 100 is implemented in this manner.

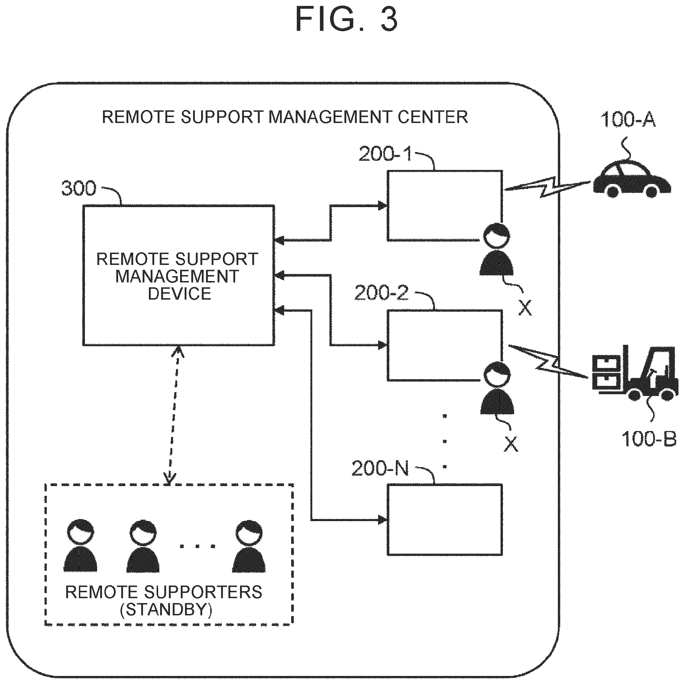

FIG. 3 is a conceptual diagram showing an example of the configuration of the remote support system 1. In the example shown in FIG. 3, a remote support management center is located on a predetermined site or in a predetermined building. The management device 300 and a plurality of remote support terminals 200 (200-1 to 200-N, where N is an integer of 2 or more) are installed in the remote support management center. A plurality of remote supporters X works at the remote support management center. The management device 300 monitors and manages the states of the remote support terminals 200 in the remote support management center. The management device 300 monitors and manages the states of the remote supporters X in the remote support management center.

### 2. Configuration Examples

### 2-1. Configuration Example of Mobility

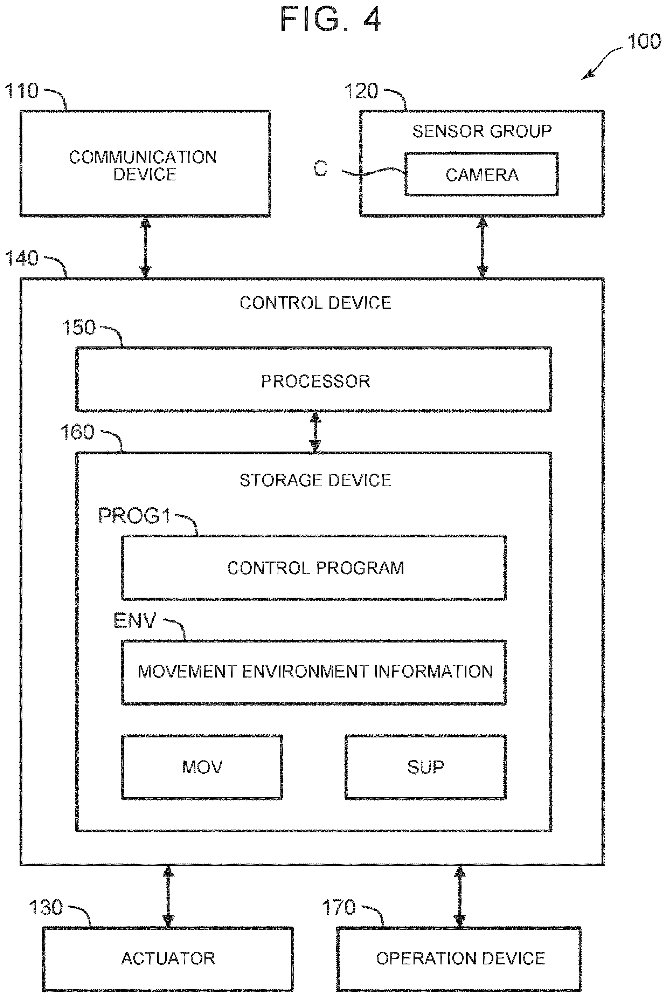

FIG. 4 is a block diagram showing an example of the configuration of the mobility 100. The mobility 100 includes a communication device 110, a sensor group 120, one or more actuators 130, and a control device 140.

The communication device 110 wirelessly communicates with the outside of the mobility 100. For example, the communication device 110 wirelessly communicates with the remote support terminal 200 and the management device 300.

The sensor group 120 includes a perception sensor, a mobility state sensor, and a location sensor. The perception sensor perceives (detects) the surroundings of the mobility 100. Examples of the perception sensor include a camera C, a Laser Imaging Detection and Ranging (LIDAR) sensor, and a radar. The mobility state sensor detects the state of the mobility 100. The mobility state sensor includes a speed sensor, an acceleration sensor, a yaw rate sensor, and a steering angle sensor. The location sensor detects the location and orientation of the mobility 100. For example, the location sensor includes a Global Navigation Satellite System (GNSS) receiver.

The actuator 130 moves the mobility 100. For example, the actuator 130 includes a forward and reverse movement actuator for moving (accelerating and decelerating) the mobility 100 forward and backward. As another example, the actuator 130 may include a lateral movement actuator for moving the mobility 100 laterally. As still another example, when the mobility 100 is equipped with an arm, the actuator 130 may include an arm actuator for moving the arm.

For example, when the mobility 100 is a common vehicle, the actuator 130 includes a steering device, a drive device, and a braking device. The steering device steers wheels. For example, the steering device includes an electric power steering (EPS) system. The drive device is a power source that generates a driving force. Examples of the drive device include an engine, an electric motor, and an in-wheel motor. The braking device generates a braking force.

The control device 140 is a computer that controls the mobility 100. The control device 140 includes one or more processors 150 (hereinafter simply referred to as "processor 150") and one or more storage devices 160 (hereinafter simply referred to as "storage device 160"). The processor 150 performs various processes. Examples of the processor 150 include a general purpose processor, a special purpose processor, a central processing unit (CPU), a graphics processing unit (GPU), an application-specific integrated circuit (ASIC), a field-programmable gate array (FPGA), an integrated circuit, a conventional circuit, and/or combinations thereof. The processor 150 can also be referred to as "circuitry" or "processing circuitry." Circuitry is hardware programmed to implement the described functions, or hardware that performs the functions. The storage device 160 stores various types of information. Examples of the storage device 160 include a volatile memory, a nonvolatile memory, a hard disk drive (HDD), and a solid state drive (SSD).

A control program PROG1 is a computer program that is executed by the processor 150. The functions of the control device 140 may be implemented through cooperation between the processor 150 that executes the control program PROG1 and the storage device 160. The control program PROG1 is stored in the storage device 160. Alternatively, the control program PROG1 may be recorded on a computer-readable recording medium.

The control device 140 acquires movement environment information ENV indicating the movement environment of the mobility 100 (e.g., the driving environment of a vehicle). The movement environment information ENV is stored in the storage device 160.

The movement environment information ENV includes surroundings information indicating the perception results from the perception sensor. For example, the surroundings information includes an image captured by the camera C. The surroundings information may include object information on objects around the mobility 100. Examples of the objects around the mobility 100 include pedestrians, other vehicles (preceding vehicles, parked vehicles, etc.), white lines, stop lines, traffic lights, signs, and roadside structures. The object information indicates the relative positions and relative speeds of the objects with respect to the mobility 100. For example, the objects can be identified and the relative positions of the objects can be calculated by analyzing the image obtained by the camera C. Alternatively, the objects can be identified and the relative positions and relative speeds of the objects can be acquired based on point cloud information obtained by a LIDAR sensor.

The movement environment information ENV may include mobility state sensor information indicating the detection results from the mobility state sensor. The mobility state sensor information indicates the speed, acceleration (longitudinal acceleration, lateral acceleration), yaw rate, steering angle, etc. of the mobility 100.

The movement environment information ENV may further include location information indicating the location and moving direction (orientation) of the mobility 100. The location information is obtained by the location sensor. Accurate location information may be acquired by localization using map information and the surroundings information (object information).

The control device 140 performs movement control to control movement of the mobility 100. The movement control includes forward and reverse movement control and lateral movement control. The control device 140 performs the movement control by controlling the actuator 130.

The control device 140 may perform autonomous movement control based on the movement environment information ENV. More specifically, the control device 140 generates a movement plan for the mobility 100 based on the movement environment information ENV. The control device 140 also generates a target trajectory that is necessary for the mobility 100 to travel according to the movement plan, based on the movement environment information ENV. The target trajectory includes a target location and a target speed. The control device 140 then performs the movement control so that the mobility 100 follows the target trajectory.

When remote support of the mobility 100 is performed, the control device 140 communicates with the remote support terminal 200 via the communication device 110.

The control device 140 transmits the mobility information MOV to the remote support terminal 200. The mobility information MOV is information necessary for the remote supporter X to remotely support the mobility 100, and includes at least part of the movement environment information ENV described above. In particular, the mobility information MOV includes the image captured by the camera C. The mobility information MOV may include other surroundings information. The mobility information MOV may include the mobility state sensor information. The mobility information MOV may include the location information.

The control device 140 receives the remote support information SUP from the remote support terminal 200. In the example of remote operation, the remote support information SUP is information on remote operation by the remote supporter X (steering operation, acceleration operation, deceleration operation, forward and reverse movement operation, lateral movement operation, etc.), and includes the amount of operation input by the remote supporter X. The control device 140 performs the movement control according to the received remote support information SUP (i.e., the remote operation information).

### 2-2. Configuration Example of Remote Support Terminal

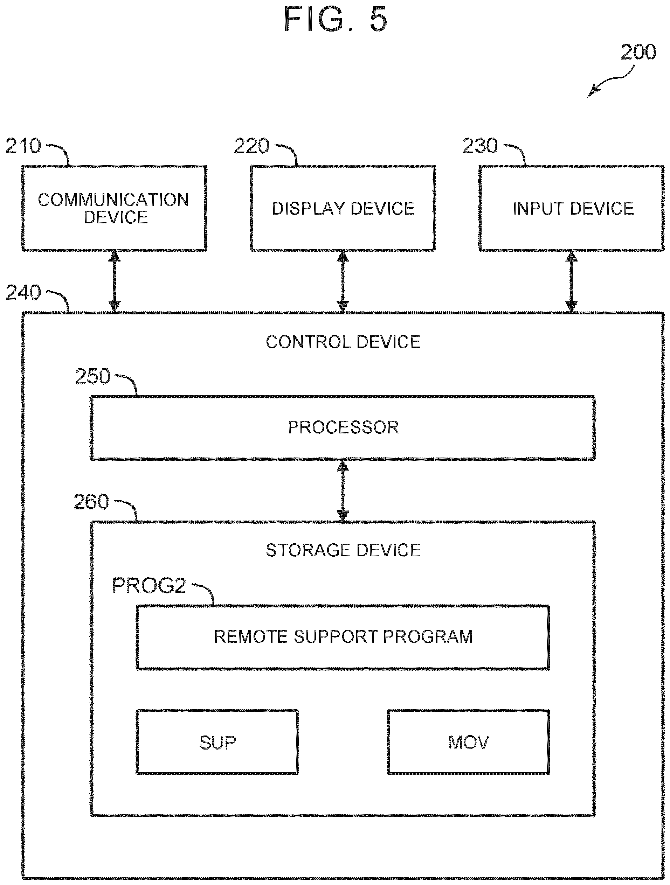

FIG. 5 is a block diagram showing an example of the configuration of the remote support terminal 200. The remote support terminal 200 includes a communication device 210, a display device 220, an input device 230, and a control device 240.

The communication device 210 communicates with the mobility 100 and the management device 300.

The display device 220 displays various types of information to the remote supporter X who performs remote support. In other words, the display device 220 presents various types of information to the remote supporter X by displaying them. The display device 220 is typically a display (monitor) such as a liquid crystal display or an organic electroluminescence (EL) display. The display device 220 may be a touch panel.

The input device 230 receives inputs from the remote supporter X. For example, the input device 230 may include a remote operation member that the remote supporter X operates when remotely operating the mobility 100. Examples of the remote operation member include a steering wheel, an accelerator pedal, a brake pedal, a turn signal lever, a joystick, a directional pad, and a switch. The remote operation member may be a touch panel. The input device 230 may include a member other than the remote operation member, such as a keyboard, a mouse, and a touch panel.

The control device 240 controls the remote support terminal 200. The control device 240 includes one or more processors 250 (hereinafter simply referred to as "processor 250") and one or more storage devices 260 (hereinafter simply referred to as "storage device 260"). The processor 250 performs various processes. Examples of the processor 250 include a CPU, a GPU, an ASIC, and an FPGA. The storage device 260 stores various types of information. Examples of the storage device 260 include a volatile memory, a nonvolatile memory, an HDD, and an SSD. The processor 250 performs various processes. Examples of the processor 250 include a general purpose processor, a special purpose processor, a CPU, a GPU, an ASIC, an FPGA, an integrated circuit, a conventional circuit, and/or combinations thereof. The processor 250 can also be referred to as "circuitry" or "processing circuitry." Circuitry is hardware programmed to implement the described functions, or hardware that performs the functions. The storage device 260 stores various types of information. Examples of the storage device 260 include a volatile memory, a nonvolatile memory, an HDD, and an SSD.

A remote support program PROG2 is a computer program that is executed by the processor 250. The functions of the control device 240 may be implemented through cooperation between the processor 250 that executes the remote support program PROG2 and the storage device 260. The remote support program PROG2 is stored in the storage device 260. Alternatively, the remote support program PROG2 may be recorded on a computer-readable recording medium. The remote support program PROG2 may be provided via a network.

The control device 240 communicates with the mobility 100 via the communication device 210. The control device 240 receives the mobility information MOV transmitted from the mobility 100. The control device 240 presents the mobility information MOV including the image to the remote supporter X by displaying the mobility information MOV on the display device 220. The remote supporter X can grasp the state and surroundings of the mobility 100 based on the mobility information MOV displayed on the display device 220.

In the example of remote operation, the remote supporter X operates the remote operation member of the input device 230. The amount of operation of the remote operation member is detected by a sensor installed on the remote operation member. In the example of remote assistance, the remote supporter X gives various instructions (e.g., a start instruction) via the input device 230. The control device 240 generates remote support information SUP including the operation amount or instruction input by the remote supporter X. The control device 240 transmits the remote support information SUP to the mobility 100 via the communication device 210.

### 2-3. Configuration Example of Remote Support Management Device

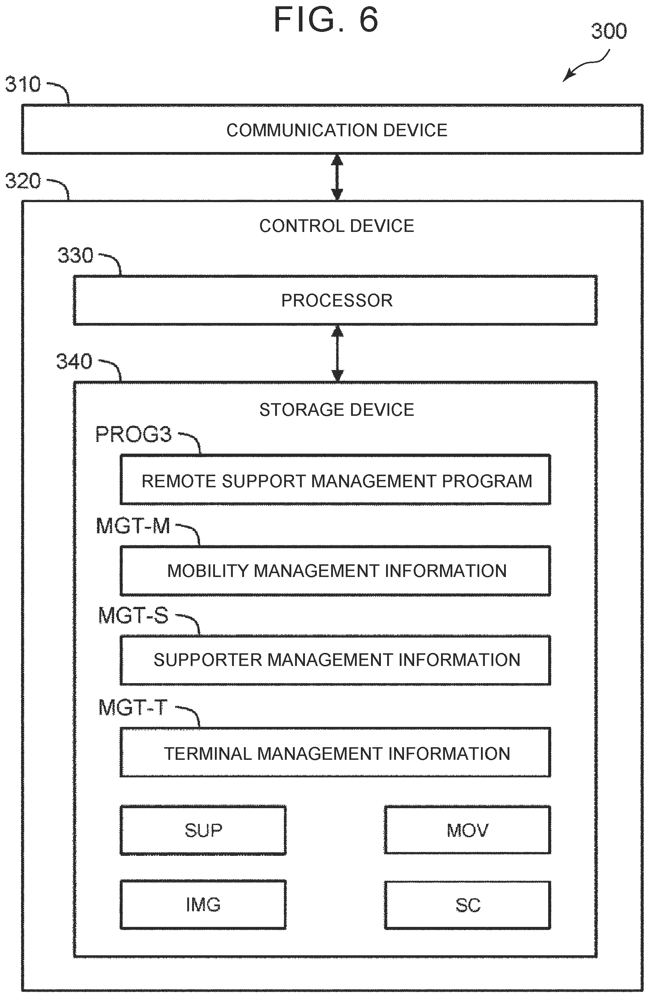

FIG. 6 is a block diagram showing an example of the configuration of the remote support management device 300. The management device 300 includes a communication device 310 and a control device 320.

The communication device 310 communicates with the mobility 100, the remote support terminal 200, and the infrastructure sensor 400 (see FIG. 1).

The control device 320 controls the management device 300. The control device 320 includes one or more processors 330 (hereinafter simply referred to as "processor 330") and one or more storage devices 340 (hereinafter simply referred to as "storage device 340"). The processor 330 performs various processes. Examples of the processor 330 include a general purpose processor, a special purpose processor, a CPU, a GPU, an ASIC, an FPGA, an integrated circuit, a conventional circuit, and/or combinations thereof. The processor 330 can also be referred to as "circuitry" or "processing circuitry." Circuitry is hardware programmed to implement the described functions, or hardware that performs the functions. The storage device 340 stores various types of information. Examples of the storage device 340 include a volatile memory, a nonvolatile memory, an HDD, and an SSD.

A remote support management program PROG3 is a computer program that is executed by the processor 330. The functions of the control device 320 may be implemented through cooperation between the processor 330 that executes the remote support management program PROG3 and the storage device 340. The remote support management program PROG3 is stored in the storage device 340. Alternatively, the remote support management program PROG3 may be recorded on a computer-readable recording medium. The remote support management program PROG3 may be provided via a network.

The storage device 340 further stores mobility management information MGT-M, supporter management information MGT-S, and terminal management information MGT-T. The mobility management information MGT-M is information for managing a plurality of mobilities 100. For example, the mobility management information MGT-M indicates a mobility identification (ID), an assignment status, and a remote support history for each mobility 100. The supporter management information MGT-S is information for managing the remote supporters X. For example, the supporter management information MGT-S indicates a supporter ID, a license that each remote supporter X has, availability, an assignment status, and a work history for each remote supporter X. The terminal management information MGT-T is information for managing the remote support terminals 200. For example, the terminal management information MGT-T indicates a terminal ID, specifications, availability, an assignment status, and an operation history for each remote support terminal 200.

The control device 320 communicates with the mobility 100 and the remote support terminal 200 via the communication device 310. The control device 320 may relay communication between the mobility 100 and the remote support terminal 200. That is, the control device 320 may relay at least either of the mobility information MOV and the remote support information SUP between the mobility 100 and the remote support terminal 200.

The control device 320 communicates with the infrastructure sensor 400 via the communication device 310. The infrastructure sensor 400 is installed in a target area where the mobility 100 moves. The target area is not particularly limited, but examples include a city, a parking lot, and a factory site. The infrastructure sensor 400 is a perception sensor (e.g., a camera or a LIDAR sensor) for perceiving the status of the target area.

In the following description, the infrastructure sensor 400 is, for example, a camera. In the example of a camera, the infrastructure sensor 400 images the target area and acquires an image IMG showing the status of the target area. The infrastructure sensor 400 transmits the acquired image IMG to the management device 300. The management device 300 collects and manages the images IMG captured by the infrastructure sensors 400. The management device 300 may transmit the image IMG captured by the infrastructure sensor 400 to the remote support terminal 200 for presentation to the remote supporter X.

### 3. Assignment Based on Score SC

In the remote support system 1, in response to a remote support request from the mobility 100, the management device 300 performs an "assignment process" for assigning a remote supporter X and a remote support terminal 200 to be used by the remote supporter X to the mobility 100.

When the management device 300 needs to acquire a large amount of information or calculate a large number of index values for the assignment process, the processing load on the management device 300 increases. More specifically, the processing load on the management device 300 increases as the number of mobilities requesting remote support at the same time increases. When the management device 300 acquires a large amount of information from the mobility 100 for the assignment process, the load of data communication between the mobility 100 and the management device 300 increases. That is, the mobility 100 transmits a larger amount of data to the management device 300. The management device 300 receives a larger amount of data from the mobility 100.

In the present embodiment, the mobility 100 requesting remote support calculates (generates) a score SC and transmits the calculated score SC to the management device 300. The score SC is information serving as the basis for the assignment process to be executed by the management device 300. More specifically, the score SC to be used as the basis for the assignment process is a normal score SC calculated when the remote support function described later is normal, and excludes an abnormal value described later. Hereinafter, the score SC described in relation to the assignment process refers to the normal score SC.

Specifically, the score SC is a quantitative parameter indicating the urgency level of a remote support request from the mobility 100. For example, the score SC is calculated in the range of 0 to 100. As the score SC increases, the remote support request is more urgent.

The management device 300 that receives the score SC performs the assignment process based on the score SC. That is, the management device 300 assigns a remote supporter X and a remote support terminal 200 to be used by the remote supporter X to the mobility 100 based on the score SC. The transmission of the score SC may also serve as the transmission of information indicating the remote support request from the mobility 100 to the management device 300. Alternatively, the mobility 100 may generate information indicating the remote support request separately from the score SC, and transmit the generated information to the management device 300.

### 3-1. Process on Mobility Side

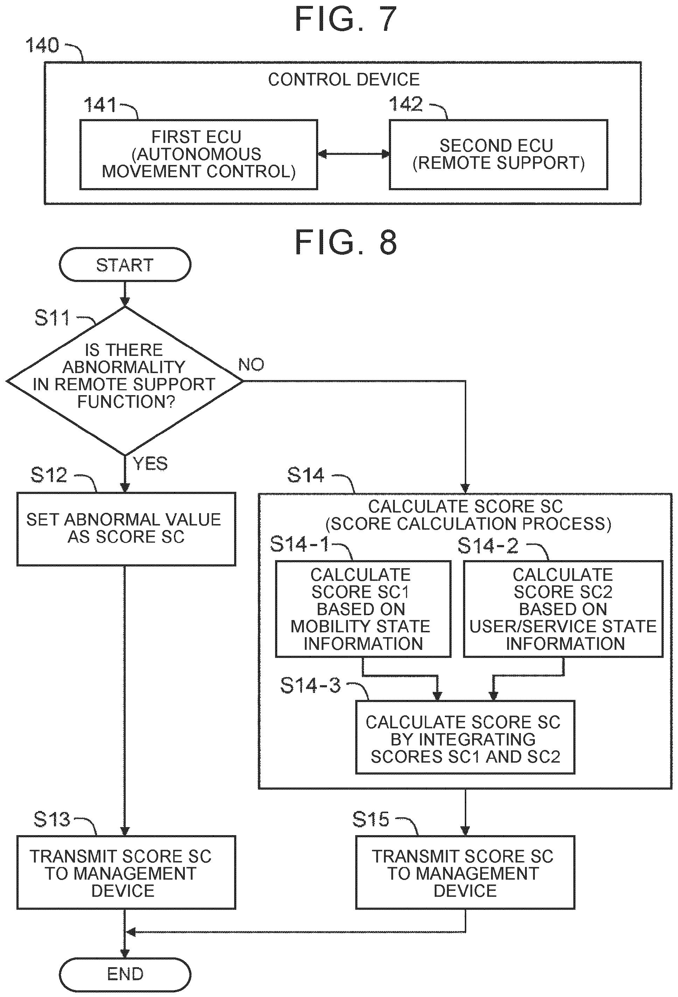

FIG. 7 is a block diagram showing a specific example of the configuration of the control device 140 shown in FIG. 4. In this example, the control device 140 is configured as a combination of a plurality of electronic control units (ECUs). As shown in FIG. 7, the ECUs include a first ECU 141 and a second ECU 142 that communicate with each other. The first ECU 141 performs various processes related to the autonomous movement control (e.g., automated driving control on a vehicle) described above. The second ECU 142 performs various processes related to the remote support. Each of the first ECU 141 and the second ECU 142 includes the processor 150 and the storage device 160.

### 3-1-1. First Specific Example

FIG. 8 is a flowchart showing a first specific example of the process on the mobility 100 side. The process in this flowchart is performed by the control device 140 (processor 150) of the mobility 100. For example, the process in this flowchart may be performed through cooperation between the first ECU 141 and the second ECU 142 as described below. The process in this flowchart may be performed, for example, in response to satisfaction of a predetermined condition that the mobility 100 requests remote support (support request condition). Whether the support request condition is satisfied is determined by, for example, the second ECU 142.

In step S11, the first ECU 141 first determines whether there is an abnormality in the remote support function of the mobility 100. The "abnormality in the remote support function" includes, for example, an abnormality in the second ECU 142 that performs the processes related to the remote support. The second ECU 142 has a self-diagnosis function, and can acquire a self-diagnosis result (normal, alert, abnormal) using this self-diagnosis function. The first ECU 141 communicates with the second ECU 142 and acquires the self-diagnosis result of the second ECU 142. The first ECU 141 determines whether there is an abnormality in the second ECU 142, that is, whether there is an abnormality in the remote support function, based on the acquired self-diagnosis result of the second ECU 142.

When there is an abnormality in the remote support function of the mobility 100 (step S11; Yes), the process proceeds to step S12. In step S12, the first ECU 141 sets a predetermined abnormal value (e.g., 999) as the score SC. The abnormal value of the score SC is a value that can be clearly distinguished from the value of the normal score SC described later.

In step S13, the first ECU 141 transmits the score SC (abnormal value) set in step S12 to the management device 300 via the communication device 110. In another example, the score SC may be transmitted to the management device 300 via a service provider affiliated with the remote support system 1.

Through the process of steps S11 to S13, the mobility 100 can notify the management device 300 that an abnormality has occurred in the remote support function using the information on the score SC that is originally used for the assignment process. The mobility 100 can use this notification to request the management device 300 to rescue the mobility 100. When requesting the rescue, the mobility 100 may transmit location information of the mobility 100 to the management device 300 together with the score SC (abnormal value).

The information on the score SC (abnormal value) transmitted to the management device 300 may be used by the management device 300 as follows. For example, a staff member at the remote support management center who views the score SC (abnormal value) transmitted to the management device 300 requests rescue of the mobility 100 from an external business operator that provides a mobility rescue service. Alternatively, for example, the management device 300 that receives the score SC (abnormal value) automatically performs a process of requesting rescue of the mobility 100 from the external business operator.

When there is no abnormality in the remote support function of the mobility 100 (step S11; No), that is, when remote support can be requested, the process proceeds to step S14. In step S14, the second ECU 142 performs a "score calculation process" for calculating the score SC (more specifically, the score SC when the remote support function is normal). Specifically, the score calculation process includes, for example, steps S14-1, S14-2, and S14-3.

In step S14-1, the second ECU 142 calculates a score SC1 based on mobility state information. The mobility state information is information indicating the state of the mobility 100. That is, the state of the mobility 100 is quantified in the form of "score SC1."

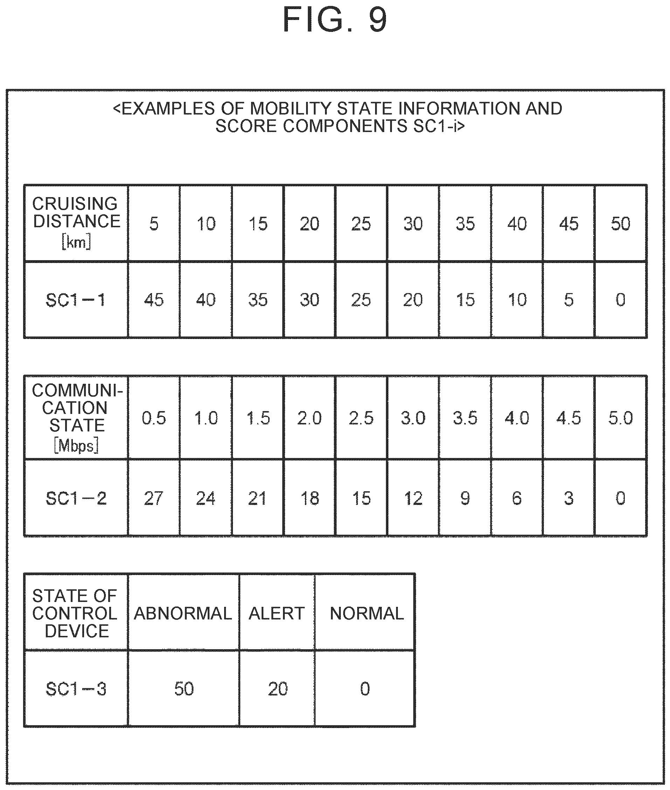

FIG. 9 shows examples of the mobility state information and score components SC1-i. The score SC1 is constituted by, for example, three score components SC1-1, SC1-2, and SC1-3.

In the example shown in FIG. 9, the mobility state information includes "information on a cruising distance D of the mobility 100 (i.e., the remaining travel distance)." In the example of the mobility 100 that uses electric power stored in a battery as its power source, the cruising distance D can be calculated based on, for example, the remaining battery charge and an average electricity efficiency. The remaining battery charge is detected by a remaining battery charge sensor in the sensor group 120. The average electricity efficiency of the mobility 100 is stored in the storage device 160. In the example of the mobility 100 that uses fuel as its power source, the cruising distance D can be calculated based on, for example, the remaining fuel amount and an average fuel efficiency. The remaining fuel amount is detected by a remaining fuel amount sensor in the sensor group 120. The average fuel efficiency of the mobility 100 is stored in the storage device 160. The second ECU 142 calculates the score component SC1-1 based on the cruising distance D that can be acquired in this manner. As shown in FIG. 9, the score component SC1-1 increases as the cruising distance D decreases. The score component SC1-1 is an example of a "first score component" according to the present disclosure.

In the example shown in FIG. 9, the mobility state information includes "information on a communication state CS of the mobility 100." Examples of the communication state CS include a transmission speed (throughput) and a transmission delay. The control device 140 of the mobility 100 can measure the transmission speed, transmission delay, etc. based on the reception state of data received from a communication partner. As another example, the control device 140 measures the transmission speed, transmission delay, etc. based on data transmitted to the communication partner and feedback received from the communication partner. The second ECU 142 calculates the score component SC1-2 based on the communication state CS that can be acquired in this manner. As shown in FIG. 9, the score component SC1-2 increases as the communication state CS of the mobility 100 is worse. The score component SC1-2 is an example of a "second score component" according to the present disclosure.

In the example shown in FIG. 9, the mobility state information includes "information on an abnormality level of the control device (e.g., the first ECU 141) that performs the autonomous movement control." For example, the first ECU 141 has a self-diagnosis function. The first ECU 141 acquires a self-diagnosis result (normal, alert, abnormal) using this self-diagnosis function. The self-diagnosis result indicates the abnormality level of the first ECU 141. The second ECU 142 communicates with the first ECU 141 and acquires the self-diagnosis result of the first ECU 141. The second ECU 142 calculates the score component SC1-3 based on the acquired self-diagnosis result of the first ECU 141, that is, the abnormality level. As shown in FIG. 9, the score component SC1-3 increases as the abnormality level of the control device (first ECU 141) that performs the autonomous movement control increases. The score component SC1-3 is an example of a "third score component" according to the present disclosure.

The second ECU 142 calculates the score SC1 based on the mobility state information, for example, by adding together the score components SC1-1, SC1-2, and SC1-3. Alternatively, the second ECU 142 may calculate any one of the three score components as the score SC1, or may calculate the score SC1 by adding together any two of the three score components.

The second ECU 142 acquires the mobility state information in real time. The second ECU 142 calculates the score SC1 in real time based on the mobility state information.

In step S14-2, the second ECU 142 calculates a score SC2 based on user/service state information. The user/service state information refers to a combination of user state information and service state information. The user state information is information indicating the state of a user of the mobility 100 (i.e., an occupant), and the service state information is information indicating the state of the remote support service for the user. That is, the state of the user and the state of the service are quantified in the form of "score SC2."

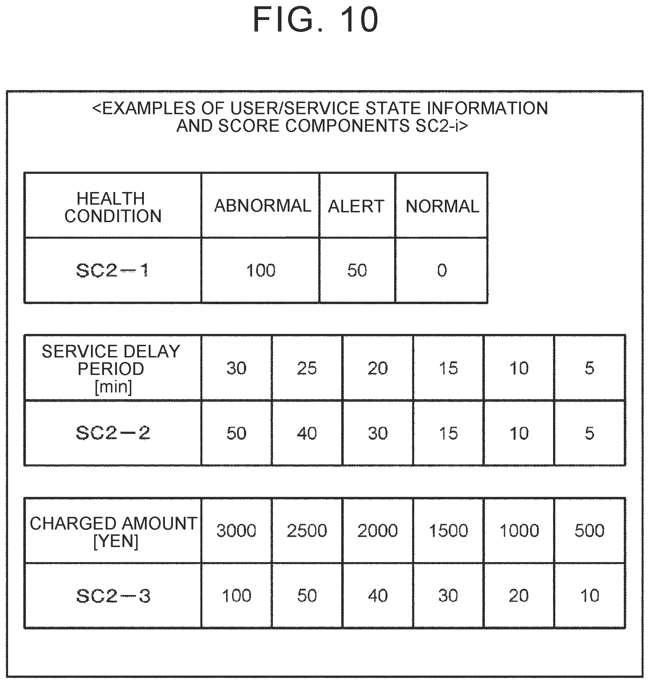

FIG. 10 shows examples of the user/service state information and score components SC2-i. The score SC2 is constituted by, for example, three score components SC2-1, SC2-2, and SC2-3.

In the example shown in FIG. 10, the user/service state information includes "information on the health condition of the user (occupant)" as an example of the user state information. The second ECU 142 may acquire the health condition of the user based on, for example, information reported by the user operating an operation device 170 (e.g., a touch panel) mounted on the mobility 100 or the user's own mobile terminal (e.g., a smartphone). As another example, a biosensor that detects biometric information of the user may be used to detect the health condition of the user. The biosensor may be included in the sensor group 120 of the mobility 100 (see FIG. 4), or may be included in the mobile terminal (e.g., a smartphone) owned by the user. Examples of the biometric information include body temperature, heart rate, blood pressure, and amount of perspiration. The second ECU 142 may acquire the biometric information detected by the biosensor, and acquire the health condition of the user based on the acquired biometric information. For example, the health condition can be obtained from the biometric information using a machine learning model. The second ECU 142 calculates the score component SC2-1 based on the health condition of the user that is acquired in this manner. As shown in FIG. 10, the score component SC2-1 increases as the health condition of the user is worse. The score component SC2-1 is an example of a "fourth score component" according to the present disclosure.

In the example shown in FIG. 10, the user/service state information includes "information on a delay period until the start of the remote support service for the user (service delay period)" as an example of the service state information. In other words, the service delay period is a waiting period required for the user to wait for the start of the remote support of the mobility 100. In the example in which the service provider acquires the service delay period from the management device 300, the second ECU 142 may communicate with the service provider and acquire the service delay period from the service provider. Alternatively, the second ECU 142 may communicate with the management device 300 and acquire the service delay period directly from the management device 300. The second ECU 142 calculates the score component SC2-2 based on the acquired service delay period. As shown in FIG. 10, the score component SC2-2 increases as the service delay period increases. The score component SC2-2 is an example of a "fifth score component" according to the present disclosure.

In the example shown in FIG. 10, the user/service state information includes "information on an amount charged to the user for the remote support service" as another example of the service state information. The second ECU 142 may acquire the information on the charged amount based on, for example, information input by the user operating the operation device 170 (e.g., a touch panel) mounted on the mobility 100 or the user's own mobile terminal (e.g., a smartphone). Alternatively, in the example in which the service provider is present between the mobility 100 and the management device 300, the second ECU 142 may communicate with the service provider and acquire the information on the charged amount from the service provider. The second ECU 142 calculates the score component SC2-3 based on the charged amount that can be acquired in this manner. As shown in FIG. 10, the score component SC2-3 increases as the charged amount increases. The score component SC2-3 is an example of a "sixth score component" according to the present disclosure.

The second ECU 142 calculates the score SC2 based on the user/service state information, for example, by adding together the score components SC2-1, SC2-2, and SC2-3. Alternatively, the second ECU 142 may calculate any one of the three score components as the score SC2, or may calculate the score SC2 by adding together any two of the three score components.

The second ECU 142 acquires the user/service state information in real time. The second ECU 142 calculates the score SC2 in real time based on the user/service state information.

In step S14-2, the user state information and the service state information are handled collectively as the user/service state information. In another example, the score SC2 may be calculated based only on the user state information or the service state information.

In step S14-3, the second ECU 142 calculates a final score (integrated score) SC by integrating the scores SC1 and SC2 calculated in steps S 14-1 and S14-2, respectively. That is, the score SC reflects the score SC1 based on the mobility state information and the score SC2 based on the user/service state information.

Specifically, in step S14-3, the second ECU 142 calculates an average value (arithmetic mean value) of the scores SC1 and SC2. When the average value is smaller than a predetermined maximum value of the score SC (e.g., 100), the average value is used as the score SC. When the average value is equal to or larger than the maximum value, the score SC is uniformly set to the maximum value.

Alternatively, the scores SC1 and SC2 may be integrated, for example, as follows. That is, the second ECU 142 may calculate a weighted average value of the scores SC1 and SC2 as the score SC instead of the arithmetic mean value. More specifically, for example, a weighting value (weighting coefficient) W2 for multiplication of the score SC2 based on the user/service state information (more specifically, at least either of the user state information and the service state information) may be set larger than a weighting value W1 for multiplication of the score SC1 based on the mobility state information. Thus, it is possible to calculate a score SC that reflects at least either of the state of the user of the mobility 100, such as a customer, and the state of the remote support service provided to the user with priority over the state of the mobility 100. This means that a remote support request that reflects consideration for the user more appropriately than in the example in which the arithmetic mean is used can be transmitted from the mobility 100 to the management device 300. Contrary to this example, the weighting value W1 may be set larger than the weighting value W2. Even in the example in which the weighted average is used, the score SC is set so as not to exceed the maximum value.

In step S15 following step S14, the second ECU 142 transmits the score SC calculated in step S14 to the management device 300 via the communication device 110. In another example, the score SC may be transmitted to the management device 300 via the service provider.

In the process in the flowchart shown in FIG. 8, the score SC is calculated based on both the mobility state information and the user/service state information. In another example, the score SC1 based on the mobility state information or the score SC2 based on the user/service state information may be calculated as the score SC.

As described above, the process in the flowchart shown in FIG. 8 may be performed when the predetermined support request condition is satisfied. Therefore, the score SC is calculated only when the mobility 100 actually requests remote support, thereby reducing the processing load on the control device 140 of the mobility 100. The process in the flowchart shown in FIG. 8 may be performed periodically, that is, at predetermined time intervals. In this example, steps S11 to S13 are performed even if the support request condition is not satisfied. Thus, the abnormality in the remote support function described later can be detected early and the management device 300 can be notified about it. In this example, the control device 140 periodically calculates the score SC when the remote support function is normal (see step S14). Therefore, the control device 140 (e.g., the second ECU 142) may determine whether the support request condition is satisfied based on whether the periodically calculated score SC is equal to or larger than a predetermined threshold.

### 3-1-2. Second Specific Example

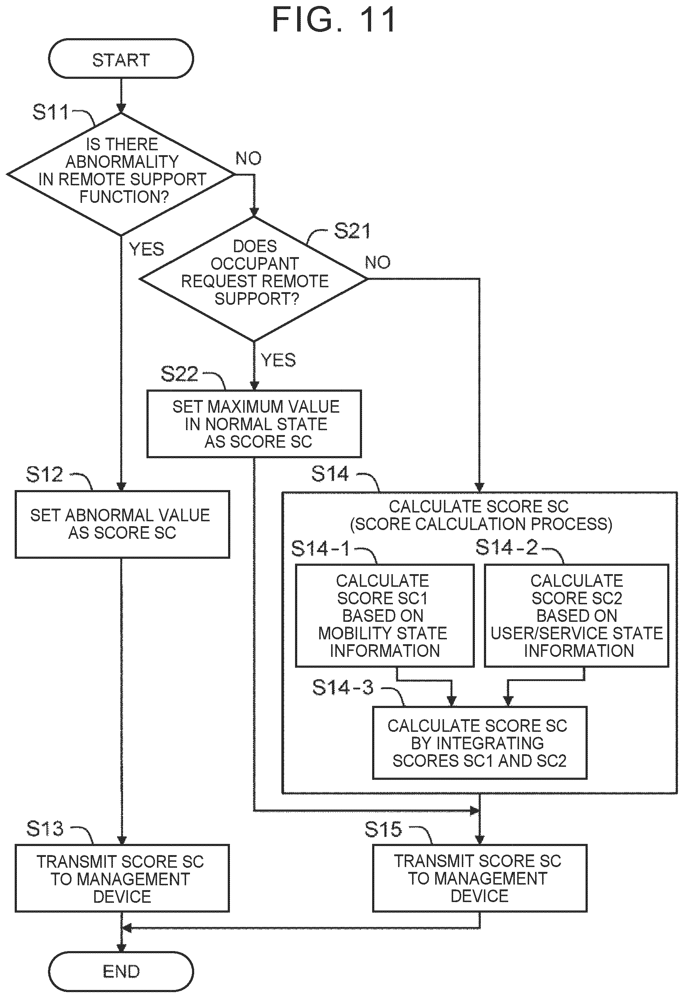

FIG. 11 is a flowchart showing a second specific example of the process on the mobility 100 side. The process in this flowchart differs from the process in the flowchart shown in FIG. 8 in that steps S21 and S22 are added.

In FIG. 11, when there is no abnormality in the remote support function (step S11; No), the process proceeds to step S21. In step S21, the control device 140 (more specifically, the second ECU 142, for example) determines whether the user in the mobility 100 requests remote support by operating the operation device. Examples of the operation device include the operation device 170 (e.g., a touch panel or a push button) mounted on the mobility 100 or the user's mobile terminal (e.g., a smartphone).

When there is no remote support request from the user (occupant) (step S21; No), the process proceeds to step S14. When there is a remote support request from the user (step S21; Yes), the process proceeds to step S22. In step S22, the second ECU 142 sets, as the score SC, the maximum value (e.g., 100) when the remote support function is normal. This maximum value is an example of a "predetermined value indicating a high urgency level of the remote support request." The setting of the maximum value as the predetermined value corresponds to giving of the highest priority level to the remote support request directly given by the user. The process then proceeds to step S15.

### 3-1-3. Example of Score Calculation in Consideration of Mobility Type

As illustrated with reference to FIG. 2, in the remote support system 1, a plurality of types of mobility 100 may be the target of remote support. When the plurality of types of mobility 100 is the target of remote support, the meaning of the numerical value indicating the mobility state information may differ depending on the type of mobility 100. For example, when the cruising distance D that is the mobility state information is the same numerical value among the mobilities 100 but maximum cruising distances Dmax of the individual types of mobility 100 are different, the same numerical value of the cruising distance D has different meanings.

Therefore, as in the example described here, mobility state information normalized as follows may be used for calculating the score SC as at least one piece of the mobility state information. That is, the control device 140 (e.g., the second ECU 142) of the mobility 100 may calculate the score SC based on mobility state information normalized based on a predetermined "calculation rule" shared among the mobilities 100. More specifically, in the example in which any other score (e.g., the score SC2 based on the user/service state information) is used together with the score SC1 based on the mobility state information to calculate the score SC, the control device 140 may calculate the score components SC1-i based on the normalized mobility state information.

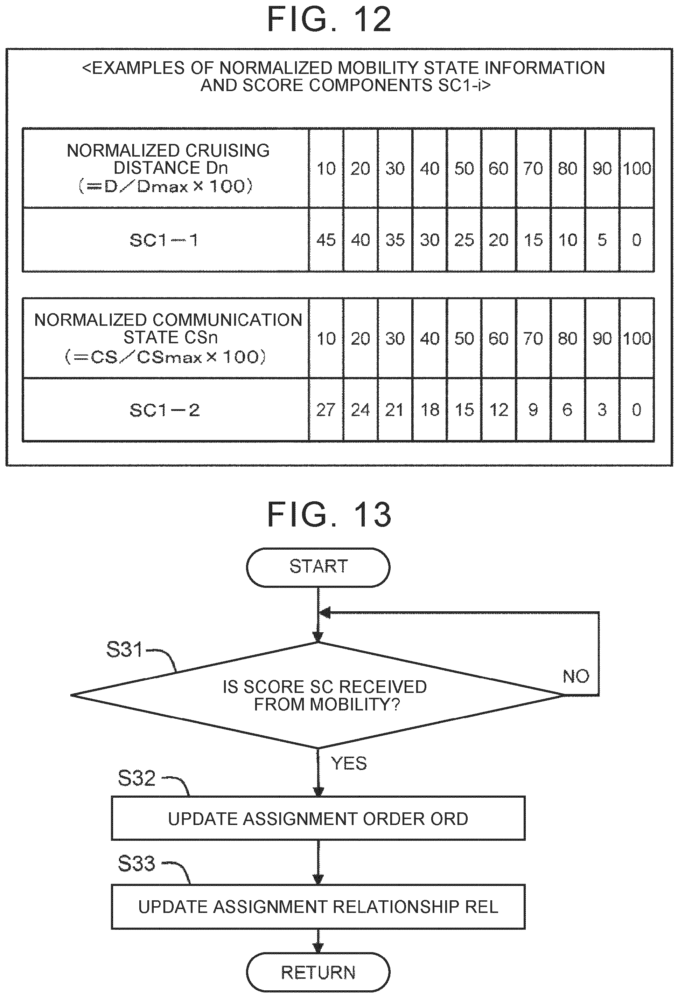

FIG. 12 shows examples of the normalized mobility state information and the score components SC1-i. In FIG. 12, the cruising distance D and the communication state CS are exemplified as the mobility state information to be normalized. A normalized cruising distance Dn and a normalized communication state CSn are calculated, for example, according to the following calculation rules.

In the example of the cruising distance D, the normalized cruising distance Dn is obtained by dividing the current cruising distance D (i.e., the remaining travel distance) by the maximum cruising distance Dmax and multiplying the result by 100. The multiplication value "100" corresponds to the value "100" that is the example of the maximum value of the score SC. The maximum cruising distance Dmax is a distance that the mobility 100 can travel without supply of at least either of electric power and fuel, and is a known value for each mobility 100.

In the example of the communication state CS, the normalized communication state CSn is obtained by dividing the current communication state CS (e.g., transmission speed (Mbps)) by a maximum communication state (e.g., maximum transmission speed (theoretical value)) CSmax and multiplying the result by 100. The maximum communication state CSmax is a known value for each mobility 100 (communication device 110).

The sharing of the calculation rule among the mobilities 100 can be implemented, for example, by the following method. That is, the calculation rule is shared by storing information indicating the relationship between the normalized mobility state information and the score SC (score component SC1-i) as shown in FIG. 12 in the storage device 160 of each mobility 100. The information indicating the relationship may be provided, for example, to each mobility 100 from the management device 300. Alternatively, in the example in which the service provider is present between the two, the information indicating the relationship may be provided to each mobility 100 via the service provider.

### 3-1-4. Effects of Mobility

As described above, according to the present embodiment, the score SC serving as the basis for assignment of at least either of the remote supporter X and the remote support terminal 200 is calculated on the mobility 100 side that requests remote support. Thus, the processing load on the management device 300 related to the assignment can be reduced. More specifically, the processing load on the management device 300 can be reduced compared to an example in which the management device 300 performs all the processes related to the calculation of the score SC. This leads to reduction in the period required for the assignment. Since the score SC is calculated on the mobility 100 side and transmitted to the management device 300, the management device 300 need not acquire a large amount of information required for the assignment from each mobility 100. Thus, it is possible to reduce the amount of communication between each mobility 100 and the management device 300.

More specifically, according to the present embodiment, a score SC indicating the urgency level of the remote support request from each mobility 100 and serving as the basis for setting of assignment order ORD is calculated on the mobility 100 side that requests remote support. Thus, the processing load on the management device 300 related to the assignment according to the assignment order ORD can be reduced and the assignment can be appropriately performed so that mobility 100 with a high urgency level is given priority using the score SC.

According to the present embodiment, the score SC can be appropriately calculated based on the mobility state information. Thus, the assignment can be performed so that, for example, a mobility 100 with a short cruising distance D is given priority. For example, the assignment can be performed so that a mobility 100 with a poor communication state CS is given priority. For example, the assignment can be performed so that a mobility 100 with a high abnormality level of the control device that performs the autonomous movement control, such as automated driving control of a vehicle, is given priority.

According to the present embodiment, the score SC can be appropriately calculated based on at least either of the user state information and the service state information. Thus, the assignment can be performed so that, for example, a mobility 100 carrying a user in a poor health condition is given priority. For example, the assignment can be performed so that a mobility 100 of a user who has a long delay period until the start of the remote support service is given priority. For example, the assignment can be performed so that a mobility 100 of a user who is charged with a large amount for the remote support service is given priority.

According to the present embodiment, when the user in the mobility 100 requests remote support by operating the operation device (e.g., the operation device 170), the predetermined value indicating a high urgency level (e.g., the maximum value) is set as the score SC. Thus, the score SC can be used to reflect the user's request for early remote support in the assignment order ORD.

According to the present embodiment, the score SC is calculated based on the mobility state information normalized based on the calculation rule shared among the plurality of types of mobility 100. Thus, the score SC can be calculated more appropriately in consideration of differences in the types of mobility 100 that are the target of remote support.

### 3-2. Process on Remote Support Management Device Side

### 3-2-1. Specific Example

FIG. 13 is a flowchart showing a specific example of the process (assignment process) on the management device 300 side. The process in this flowchart is repeated by the control device 320 (processor 330) of the management device 300.

The management device 300 receives scores SC from a plurality of mobilities 100 requesting remote support. In other words, the management device 300 acquires the scores SC from a plurality of mobilities 100 in real time. The acquired scores SC are stored in the storage device 340.

In step S31, the control device 320 determines whether a new score SC is received from a certain mobility 100 via the communication device 310. When no new score SC is acquired (step S31; No), the control device 320 continues to receive a new score SC. When a new score SC is acquired (step S31; Yes), the control device 320 continues to receive new scores SC from other mobilities 100 and performs the process from step S32 onwards in parallel.

In step S32, the control device 320 updates the "assignment order ORD" to reflect the newly received score SC. The assignment order ORD indicates, for example, the order of assignment of the remote supporters X and the remote support terminals 200 to one or more mobilities 100 to which the remote supporters X and the remote support terminals 200 have not been assigned yet.

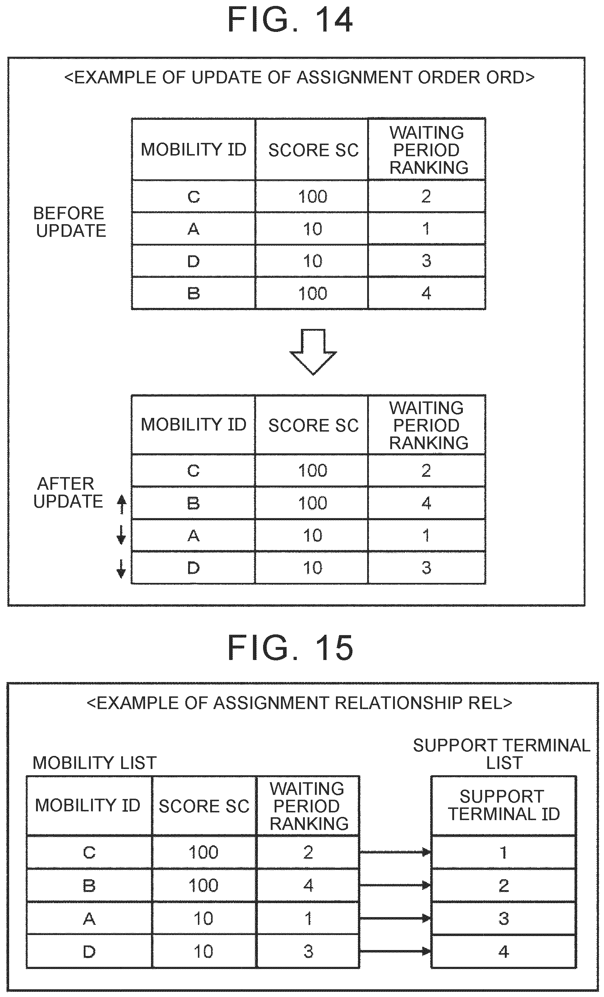

FIG. 14 shows an example of the update of the assignment order ORD in step S32. The mobility management information MGT-M (see FIG. 6) stored in the storage device 340 includes the assignment order ORD. The assignment order ORD is specified, for example, in the form of a mobility list as shown in FIG. 14. The mobility list includes a mobility ID, a score SC, and a waiting period ranking for each unassigned mobility 100. According to the waiting period ranking, a mobility 100 that requested remote support by transmitting the score SC at an earlier time (request time) (i.e., had a longer waiting period) is ranked higher. In this mobility list, the mobility 100 that comes first in the assignment order ORD is listed from the top. The storage device 340 stores the time when the score SC is received from each mobility 100 as the request time.

The mobility list "before update" in FIG. 14 corresponds to a mobility list read from the storage device 340 when the process proceeds to step S32 to which a mobility 100 from which a score SC has been acquired most recently in the step S31 (in FIG. 14, mobility B ranked fourth in terms of waiting period) is added.

In step S32, the control device 320 updates (determines) the assignment order ORD so that the mobility 100 with the higher score SC is moved to the top. That is, the assignment order ORD is changed in descending order of the score SC (i.e., in descending order of assignment priority). For example, in the mobility list "after update" in FIG. 14, the assignment order ORD is updated so that mobility B having a score SC of "100" is ranked higher than mobilities A and D each having a score SC of "10." Thus, the score SC serves as the basis for the setting of the assignment order ORD.

In the example shown in FIG. 14, the score SC of mobility B is the same as the score SC of mobility C. When there is a plurality of mobilities 100 having the same score SC, the assignment order ORD is updated so that mobility C ranked higher in terms of waiting period (i.e., having a longer waiting period) is ranked higher. The same applies to the relationship between mobility A and mobility D. The mobility list of the assignment order ORD updated as described above is stored in the storage device 340.

In step S33, the control device 320 updates an "assignment relationship REL" according to the assignment order ORD updated in step S32. The assignment relationship REL refers to, for example, the relationship of assignment of the remote support terminals 200 to the mobilities 100.

FIG. 15 shows an example of the update of the assignment relationship REL in step S33. The mobility management information MGT-M (see FIG. 6) stored in the storage device 340 includes, for example, the assignment relationship REL. In this example, the assignment relationship REL is specified in the form of a relationship between the mobility list and a support terminal list as shown in FIG. 15. The mobility list is described with reference to FIG. 14. The control device 320 extracts a plurality of remote support terminals 200 serving as candidates for assignment to mobilities A to D in the mobility list based on the terminal management information MGT-T (see FIG. 6). In the support terminal list shown in FIG. 15, four remote support terminals 200 extracted in this manner are identified by their IDs. In the support terminal list, the remote support terminals 200 are displayed from the top in descending order of priority level based on a predetermined rule. The order of the remote support terminals 200 is determined in advance by the control device 320 based on the terminal management information MGT-T.

As shown in FIG. 15, the control device 320 determines the assignment relationship REL so that the remote support terminal 200 with the highest priority level is assigned in order from the mobility 100 ranked highest in the assignment order ORD. In the example in which a single remote support terminal 200 is used only by a specific remote supporter X, the combination of the remote support terminal 200 and the remote supporter X to be assigned to the mobility 100 is identified when the remote support terminal 200 to be assigned to the mobility 100 is determined. In the example in which a single remote support terminal 200 is used by various remote supporters X, the control device 320 further performs a process of determining, based on the supporter management information MGT-S, the remote supporter X who is going to use the remote support terminal 200 to which the mobility 100 is assigned.

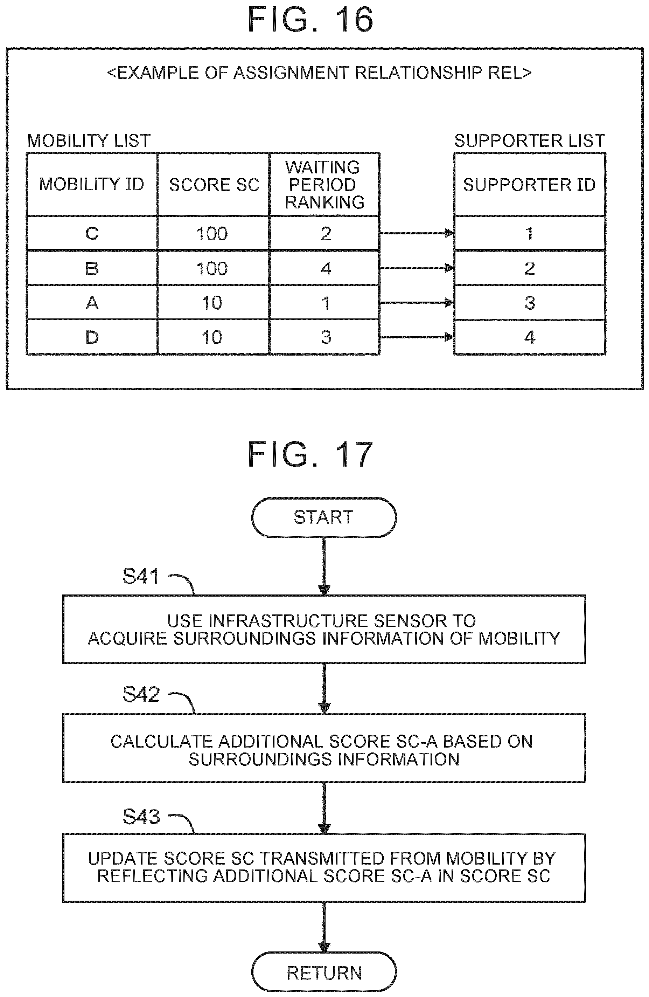

FIG. 16 shows another example of the update of the assignment relationship REL in step S33. In the example shown in FIG. 15, the control device 320 assigns a "remote support terminal 200" to each of the mobilities 100 according to the assignment order ORD. In the example shown in FIG. 16, the control device 320 assigns a "remote supporter X" to each of the mobilities 100 according to the assignment order ORD using the supporter management information MGT-S (see FIG. 6). That is, in this example, the assignment relationship REL updated according to the assignment order ORD is the relationship of assignment of the remote supporters X to the mobilities 100.

In the example shown in FIG. 16, the assignment relationship REL is specified in the form of a relationship between the mobility list and a supporter list. The mobility list is described with reference to FIG. 14. The control device 320 extracts a plurality of remote supporters X serving as candidates for assignment to mobilities A to D in the mobility list based on the supporter management information MGT-S. In the supporter list shown in FIG. 16, four remote supporters X extracted in this manner are identified by their IDs. In the supporter list, the remote supporters X are displayed from the top in descending order of priority level based on a predetermined rule. The order of the remote supporters X is determined in advance by the control device 320 based on the supporter management information MGT-S.

As shown in FIG. 16, the control device 320 determines the assignment relationship REL so that the remote supporter X with the highest priority level is assigned in order from the mobility 100 ranked highest in the assignment order ORD. In the example in which a single remote support terminal 200 is used only by a specific remote supporter X, the combination of the remote supporter X and the remote support terminal 200 to be assigned to the mobility 100 is identified when the remote supporter X to be assigned to the mobility 100 is determined. In the example in which a single remote support terminal 200 is used by various remote supporters X, the control device 320 further performs a process of determining, based on the terminal management information MGT-T, the remote support terminal 200 to be used by the remote supporter X to whom the mobility 100 is assigned.

In still another example, the control device 320 may perform a process of assigning both the "remote support terminal 200" and the "remote supporter X" to each of the mobilities 100 according to the assignment order ORD using the terminal management information MGT-T and the supporter management information MGT-S.

### 3-2-2. Score Update by Management Device

The management device 300 that receives the score SC calculated on the mobility 100 side may update the score SC as in the following examples.

### 3-2-2-1. Use of Infrastructure Sensor Information

FIG. 17 is a flowchart showing an example of a process related to update of the score SC by the management device 300 using infrastructure sensor information. The process in this flowchart is performed by the control device 320 in response to reception of the score SC from the mobility 100. More specifically, a mobility 100 (update target mobility) for which the management device 300 can acquire "surroundings information" using the infrastructure sensor 400 is the target of update of the score SC by the process in this flowchart.

In step S41, the control device 320 uses the infrastructure sensor 400 to acquire surroundings information of the mobility 100 that has transmitted the score SC. Specifically, in the example in which the mobility 100 is a vehicle, the control device 320 acquires surroundings information by, for example, analyzing the image IMG received from the infrastructure sensor 400 via the communication device 310. The surroundings information is information indicating the status of an area where the mobility 100 moves. The acquired surroundings information is, for example, information indicating the degree of congestion on a road ahead of the mobility 100 that is a vehicle.

In step S42, the control device 320 calculates an additional score SC-A of the mobility 100 based on the acquired surroundings information. For example, the control device 320 calculates the additional score SC-A so that the additional score SC-A increases as the degree of road congestion due to a factor such as a traffic jam increases.

In step S43, the control device 320 updates the score SC transmitted from the mobility 100 by reflecting the calculated additional score SC-A in the transmitted score SC. This update can be performed, for example, using a method similar to the integration of the scores SC1 and SC2 used in step S14-3 (see FIG. 8). For example, the transmitted score SC may be updated by an arithmetic mean value of the score SC and the additional score SC-A. Alternatively, the transmitted score SC may be updated by a weighted average value of the score SC and the additional score SC-A.

For example, when a service of transporting a user whose health condition has deteriorated in a vehicle to a hospital is provided by remote support (remote driving), the score SC is updated by the additional score SC-A as described above, thereby obtaining, for example, the following effects. That is, the urgency level indicated by the score SC related to a remote support request for the service can be appropriately increased in consideration of the degree of congestion on the road ahead of the vehicle (mobility 100) that cannot be acquired by sensors mounted on the vehicle. When the weighted average value is used, for example, a weighting value for multiplication of the additional score SC-A may be set larger than a weighting value for multiplication of the score SC transmitted from the mobility 100. In exemplary service given here, the urgency level indicated by the score SC related to the remote support request for the service can be increased more appropriately in consideration of the degree of road congestion.

### 3-2-2-2. Example of Score Update in Consideration of Mobility Type

As illustrated with reference to FIG. 2, in the remote support system 1, a plurality of types of mobility 100 may be the target of remote support. When the plurality of types of mobility 100 is the target of remote support, it may be inappropriate to handle the scores SC of the same numerical value in the same way regardless of the types of the mobilities 100. For example, when the scores SC transmitted from a mobility 100 of the type that is the target of remote support with a relatively high urgency level and from a mobility 100 of the type that is the target of remote support with a relatively low urgency level are the same numerical value, it is desirable to handle the former score SC as having a higher urgency level.

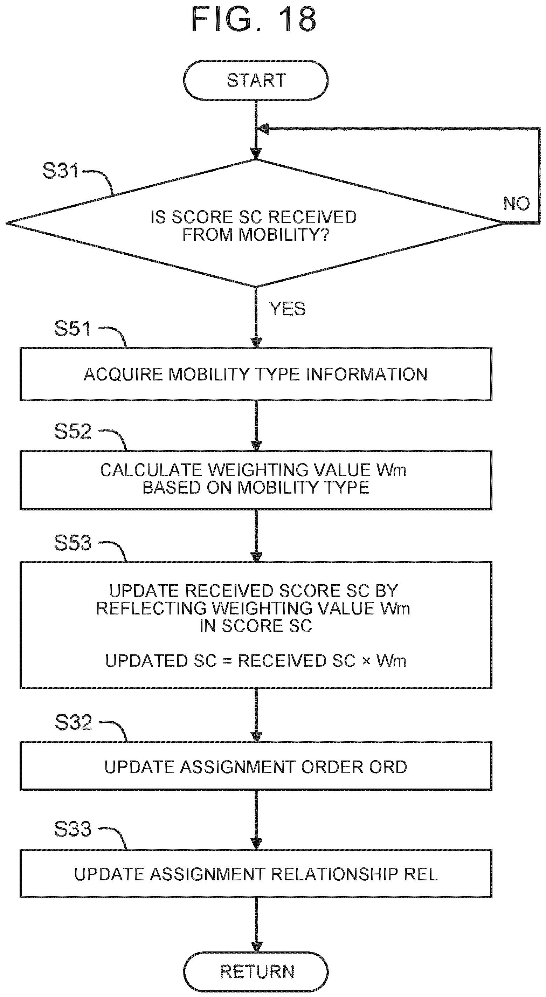

FIG. 18 is a flowchart showing an example of a process on the management device 300 side involving a process related to update of the score SC in consideration of the type of mobility 100. The process in this flowchart differs from the process in the flowchart shown in FIG. 13 in that steps S51 to S53 are added.

In FIG. 18, the process proceeds to step S51 when a new score SC is acquired (step S31; Yes). In step S51, the control device 320 of the management device 300 acquires information indicating the type of the mobility 100 that has transmitted the current score SC (mobility type information). For example, when the mobility management information MGT-M includes the ID and type of each mobility 100, the control device 320 acquires the mobility type information based on the mobility ID transmitted from the mobility 100 together with the score SC and the mobility management information MGT-M. Alternatively, the mobility type information may be acquired from the mobility 100 together with the score SC, or may be acquired via the service provider.

In step S52, the control device 320 calculates, based on the mobility type information, a weighting value (mobility weighting value) Wm according to the type of the mobility (update target mobility) 100 that has transmitted the score SC. Specifically, the weighting value Wm is determined in advance for each type of mobility 100. Information indicating the correspondence between the weighting value Wm and the type of mobility 100 is stored in the storage device 340. The control device 320 calculates the weighting value Wm according to the type of the update target mobility 100 based on the information indicating the correspondence and the mobility type information.

In the information indicating the correspondence, the weighting value Wm may be determined, for example, as follows. For example, based on the urgency level of remote support evaluated in advance from a broad perspective of the type of the mobility 100 that receives remote support, the weighting value Wm may be determined so that the weighting value Wm is higher for a mobility 100 of the type that receives remote support with a high urgency level than for a mobility 100 of the type that receives remote support with a low urgency level. For example, the weighting value Wm of a mobility 100 that carries people may be set larger than the weighting value Wm of a mobility 100 that carries goods.

In step S53, the control device 320 updates the score SC received from the update target mobility 100 by reflecting the weighting value Wm in the score SC. Specifically, the control device 320 updates the score SC by, for example, multiplying the received score SC by the weighting value Wm serving as a weighting coefficient. The process then proceeds to step S32. The maximum value of the score SC obtained by reflecting the weighting value Wm in this manner may be the same as the maximum value of the score SC calculated on the mobility 100 side (e.g., 100), or may be a value larger than the maximum value (e.g., 150).

### 3-2-2-3. Example of Score Update in Consideration of Types of Mobility and Service

As illustrated with reference to FIG. 2, in the remote support system 1, a plurality of types of remote support service may be provided to one or more mobilities 100. In the example in which the plurality of types of service is provided, it may be inappropriate to handle the scores SC of the same numerical value in the same way regardless of the types of the services. For example, even if the scores SC transmitted from a mobility 100 that receives a service of transporting people and a mobility 100 that receives a service of transporting goods (e.g., mail) are the same numerical value, it may be desirable to handle the former score SC as having a higher urgency level.

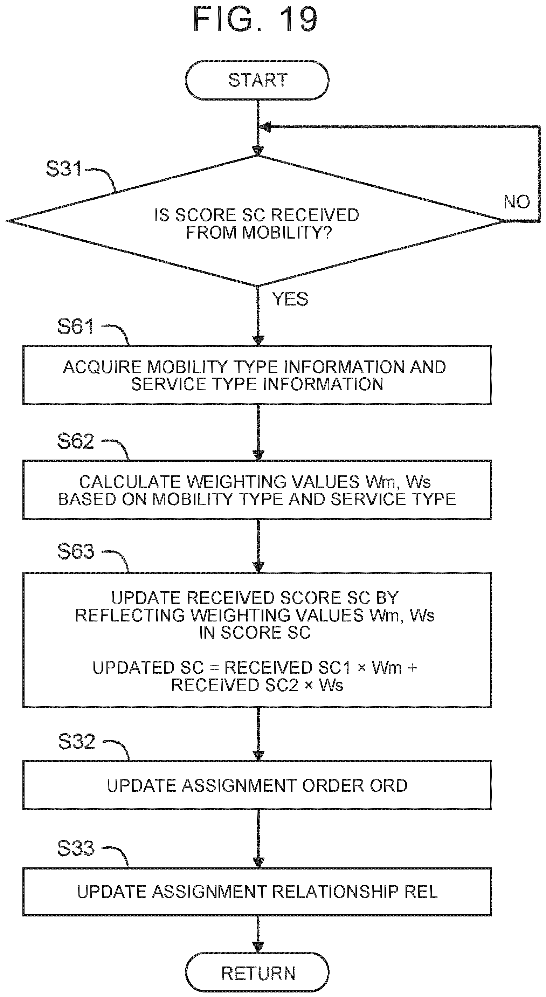

FIG. 19 is a flowchart showing an example of a process on the management device 300 side involving a process related to update of the score SC in consideration of the type of mobility 100 and the type of service. The process in this flowchart differs from the process in the flowchart shown in FIG. 13 in that steps S61 to S63 are added. In the example shown in FIG. 19, it is assumed that the information on the score SC transmitted from the mobility 100 also includes information on the numerical values of the scores SC1 and SC2 constituting the score SC.

In FIG. 19, the process proceeds to step S61 when a new score SC is acquired (step S31; Yes). In step S61, the control device 320 of the management device 300 acquires mobility type information and service type information of the mobility 100 that has transmitted the current score SC. A specific example of the method for acquiring the mobility type information is similar to that in the process of step S51. The service type information is information indicating the type of the remote support service provided to the mobility 100. The service type information can be acquired by a method similar to the method for acquiring the mobility type information.

In step S62, the control device 320 calculates, based on the mobility type information, a mobility weighting value Wm that is the weighting value according to the type of the mobility (update target mobility) 100 that has transmitted the score SC. The control device 320 calculates, based on the service type information, a service weighting value Ws that is a weighting value according to the type of the service provided to the update target mobility 100.

Specifically, the mobility weighting value Wm can be calculated using the method described above for step S52. The service weighting value Ws is determined in advance for each type of service. Information indicating the correspondence between the service weighting value Ws and the type of service is stored in the storage device 340. The control device 320 calculates the service weighting value Ws according to the type of the service based on the information indicating the correspondence and the service type information.

In the information indicating the correspondence, the service weighting value Ws may be determined as follows. For example, based on the urgency level of each service evaluated in advance, the service weighting value Ws may be determined so that the service weighting value Ws is higher for a service with a high urgency level than for a service with a low urgency level. For example, the service weighting value Ws of a service for transporting people may be set larger than the service weighting value Ws of a service for transporting goods. For example, the service weighting value Ws of a service for delivering merchandise by a specified time may be set larger than the service weighting value Ws of a delivery service for transporting a rental car to an office.

In step S63, the control device 320 updates the score SC of the update target mobility 100 based on the score (mobility score) SC1 of the update target mobility 100 reflecting the mobility weighting value Wm and the score (service score) SC2 of the update target mobility 100 reflecting the service weighting value Ws. Specifically, the control device 320 updates the score SC by, for example, the sum of the product of the mobility score SC1 multiplied by the weighting value Wm serving as the weighting coefficient and the product of the service score SC2 multiplied by the weighting value Ws serving as the weighting coefficient. Alternatively, similarly to the process of step S 14-3 (see FIG. 8), the control device 320 may update the score SC by an average value of the product of the mobility score SC1 and the weighting value Wm and the product of the service score SC2 and the weighting value Ws. The process then proceeds to step S32.

The service score SC2 used in the process shown in FIG. 19 may be based on the service state information, and may be based on user information together with the service state information calculated in step S14-2 (see FIG. 8). The maximum value of the score SC updated by the process of step S63 may be the same as the maximum value of the score SC calculated on the mobility 100 side (e.g., 100), or may be a value larger than the maximum value (e.g., 150). The process shown in FIG. 19 can also be applied to an example of a remote support system in which a plurality of mobilities 100 of one type receives a plurality of types of remote support service. In this example, the mobility weighting value Wm serving as the weighting coefficient may be set to 1.

### 3-2-3. Effects of Remote Support Management Device

As described above, according to the present embodiment, the remote support management device 300 acquires the score SC from the mobility 100 that requests remote support. Thus, the processing load on the management device 300 related to the assignment can be reduced compared to the example in which the management device 300 performs all the processes related to the calculation of the score SC. The management device 300 calculates the additional score SC-A based on the surroundings information from one or more infrastructure sensors 400, and updates the score SC transmitted from the mobility 100 by reflecting the additional score SC-A in the score SC. Thus, the score SC can be appropriately determined using the surroundings information that cannot be acquired by sensors mounted on the mobility 100. For example, when the mobility 100 is a vehicle, the surroundings information (e.g., the degree of congestion on a road ahead of the vehicle) that cannot be acquired by the camera of the vehicle can be acquired from the infrastructure sensor 400. Thus, changes in traffic conditions ahead of the vehicle can be acquired more quickly and accurately than in a case of using congestion information from an external traffic information center.

As described above, according to the present disclosure, it is possible to appropriately perform the assignment while reducing the processing load on the management device 300 related to the assignment.

More specifically, according to the present embodiment, the management device 300 acquires, from each mobility 100, the score SC indicating the urgency level of the remote support request from each mobility 100 and serving as the basis for setting of the assignment order ORD. Thus, the processing load on the management device 300 related to the assignment according to the assignment order ORD can be reduced and the assignment can be appropriately performed so that mobility 100 with a high urgency level is given priority using the score SC.

The management device 300 may update the score SC transmitted from each mobility 100 to reflect the weighting value Wm according to the type of the mobility 100. Thus, the assignment process can be perform using the score SC determined more appropriately in consideration of (by reflecting) differences in the types of mobility 100. In this example as well, the score SC is basically calculated on each mobility 100 side. Therefore, the processing load on the management device 300 can be reduced and the management device 300 that manages the mobilities 100 can update the scores SC appropriately. For example, it is possible to more appropriately determine, in terms of the type of mobility 100, a higher score SC for a mobility 100 with a high urgency level of the remote support request. In the example in which the assignment order ORD is set based on the scores SC, it is possible to appropriately increase the priority level of the assignment of the mobility 100.

The management device 300 may update the score SC transmitted from the mobility 100 based on the mobility score SC1 reflecting the mobility weighting value Wm according to the type of mobility 100 and the service score SC2 reflecting the service weighting value Ws according to the type of service. Thus, the assignment process can be perform using the score SC determined more appropriately in consideration of (by reflecting) differences in the types of mobility 100 and the types of service. In this example as well, the score SC is basically calculated on each mobility 100 side. Therefore, the processing load on the management device 300 can be reduced and the management device 300 that manages the mobilities 100 can update the scores SC appropriately.

According to the present embodiment, when there is a plurality of mobilities 100 having the same score SC, the assignment order ORD is updated so that the mobility 100 that requested remote support at an earlier time is ranked higher. Thus, even if the scores SC of the mobilities 100 have the same value, the priority levels of the assignment can be appropriately determined using the scores SC.

The "score SC" according to the present disclosure may be anything serving as the basis for the assignment process, and is not limited to being used for setting the assignment order ORD. That is, the score SC may be used as follows. For example, when the management device 300 receives the scores SC from two mobilities 100 and two or more candidates for the remote supporters X are waiting and two or more remote support terminals 200 are available, the management device 300 may perform the assignment process to assign a person having a higher skill level out of the two or more candidates for the remote supporters X to the mobility 100 having a higher score SC (i.e., a higher urgency level).

## Claims

1. A mobility configured to receive remote support via a management device (300), the mobility comprising one or more processors configured to:
calculate a score serving as a basis of an assignment process performed by the management device (300), the assignment process being a process of assigning at least one of a remote supporter and a remote support terminal (200) to the mobility, and the remote support terminal (200) being used by the remote supporter; and
transmit the calculated score to the management device (300).

2. The mobility according to claim 1, wherein:
the assignment process includes assigning at least one of the remote supporter and the remote support terminal (200) to each of a plurality of mobilities including the mobility according to assignment order based on the score from each of the mobilities; and
the score calculated by the one or more processors indicates an urgency level of a request for the remote support from each of the mobilities, and serves as a basis of setting of the assignment order.

3. The mobility according to claim 2, wherein the one or more processors are configured to calculate the score based on mobility state information indicating a state of the mobility.

4. The mobility according to claim 2 or 3, wherein the one or more processors are configured to calculate the score based on at least one of user state information indicating a state of a user of the mobility and service state information indicating a state of a service of the remote support for the user.

5. The mobility according to claim 2, wherein the one or more processors are configured to, when a user in the mobility requests the remote support by operating an operation device, set, as the score, a predetermined value indicating that the urgency level is high.

6. The mobility according to claim 3, wherein:
the mobility state information includes information on a distance that the mobility is capable of cruising; and
the score includes a first score component that increases as the distance decreases.

7. The mobility according to claim 3, wherein:
the mobility state information includes information on a communication state of the mobility; and
the score includes a second score component that increases as the communication state is worse.

8. The mobility according to claim 3, wherein:
the one or more processors are configured to perform control of autonomous movement;
the mobility state information includes information on an abnormality level of the one or more processors; and
the score includes a third score component that increases as the abnormality level increases.

9. The mobility according to claim 4, wherein:
the user state information includes information on a health condition of the user in the mobility; and
the score includes a fourth score component that increases as the health condition is worse.

10. The mobility according to claim 4, wherein:
the service state information includes information on a delay period until a start of the service for the user; and
the score includes a fifth score component that increases as the delay period increases.

11. The mobility according to claim 4, wherein:
the service state information includes information on an amount charged to the user for the service; and
the score includes a sixth score component that increases as the charged amount increases.

12. The mobility according to claim 3, wherein:
the number of types of the mobilities is plural; and
the one or more processors are configured to calculate the score based on the mobility state information normalized based on a calculation rule shared among the mobilities.

13. A remote support system comprising:
a plurality of mobilities; and
a management device (300) configured to manage remote support of the mobilities, wherein:
each of the mobilities includes one or more first processors;
the one or more first processors are configured to
calculate a score indicating an urgency level of a request for the remote support, and
transmit the calculated score to the management device (300);
the management device (300) includes one or more second processors; and
the one or more second processors are configured to
determine assignment order of the mobilities based on the score received from each of the mobilities, and
assign at least one of a remote supporter and a remote support terminal (200) to each of the mobilities according to the determined assignment order, the remote support terminal (200) being used by the remote supporter.

14. A remote support method of remote support of a plurality of mobilities performed by a computer, the remote support method comprising:
calculating, by each of the mobilities, a score indicating an urgency level of a request for the remote support from each of the mobilities;
transmitting the calculated score from each of the mobilities to a management device (300) configured to manage the remote support;
determining assignment order of the mobilities based on the score from each of the mobilities; and
assigning at least one of a remote supporter and a remote support terminal (200) to each of the mobilities according to the determined assignment order, the remote support terminal (200) being used by the remote supporter.
